# EUROPÄISCHE PATENTSCHRIFT

(11) **EP 2 411 778 B1**
(45) Veröffentlichungstag und Bekanntmachung des Hinweises auf die Patenterteilung: **15.01.2020**
(21) Anmeldenummer: 10716498.0
(22) Anmeldetag: 24.03.2010
(51) Int. Cl.: G01K 1/08, G01D 11/24

(54) **SENSORANORDNUNG UND VERFAHREN ZUR HERSTELLUNG**
SENSOR ARRANGEMENT AND METHOD FOR PRODUCTION
DISPOSITIF CAPTEUR ET PROCÉDÉ POUR SA FABRICATION

(30) Priorität: 27.03.2009 DE 102009015315
(43) Veröffentlichungstag der Anmeldung: 01.02.2012
(73) Patentinhaber: TDK Electronics AG, 81671 München (DE)
(72) Erfinder: BOHL, Benjamin, 10407 Berlin (DE); BARD, Oliver, 14612 Falkensee (DE)
(74) Vertreter: Epping - Hermann - Fischer
(86) Internationale Anmeldenummer: PCT/EP2010/053843
(87) Internationale Veröffentlichungsnummer: WO 2010/108961

(56) Entgegenhaltungen:
- EP-A1- 1 065 485
- EP-A2- 0 580 323
- WO-A2-2005/106403
- JP-A- 8 050 062
- JP-A- H04 298 002
- JP-A- H11 144 913
- JP-A- 2007 266 309
- US-A- 3 441 893

## Beschreibung

Aus der Druckschrift DE 102008022465 A1 ist eine Sensoranordnung bekannt, die zum Schutz eines Sensorelements eine Schutzumhüllung aufweist.

Die Druckschrift JP 08-050062 A beschreibt einen Temperatursensor mit einem Thermistor, der in einem Polyimid-Schlauch angeordnet ist.

Die Druckschrift EP 0 580 323 A2 beschreibt eine Sensorvorrichtung mit einem Thermistor, der in einer elektrisch isolierenden Hülle eingebettet und von einem Elastomer umgeben ist.

Die Druckschrift EP 1 065 485 A1 beschreibt einen Sensor, der ein PTC-Sensorelement in einem Schrumpfschlauch aufweist. Darüber hinaus kann ein weiterer Schrumpfschlauch über den ersten Schrumpfschlauch gezogen sein.

Die Druckschrift US 3,441,893 A beschreibt einen Widerstandstemperaturfühler beschrieben, der ein Sensorelement in einem Isolierkörper aufweist.

Die Druckschrift WO 2005/106403 A2 beschreibt einen Multifunktionssensor, der eine gedruckte Leiterplatte mit einer Mehrzahl von Sensormodulen aufweist. Die gedruckte Leiterplatte und die Sensormodule sind mit einer elektrisch isolierenden Umhüllung ummantelt.

Die Druckschriften JP H11-144913 A und JP 2007-266309 A beschreiben Sensoranordnungen, bei denen ein Sensor jeweils in einem mehrschichtigen Kunststoffgehäuse angeordnet ist, das zwei oder mehr Kunststoffmaterialien aufweist, mit denen der jeweilige Sensor nacheinander umgeben wird.

Die Druckschrift JP 04-298002 A beschreibt einen Temperatursensor, der ein in einem bereits ausgehärteten Harz eingebettetes Thermistorelement aufweist, das mit einem weitere Harz umhüllt wird, das anschließend ebenfalls ausgehärtet wird.

Eine zu lösende Aufgabe ist es, eine Sensoranordnung anzugeben, die einen ausreichenden elektrischen Schutz aufweist, wobei die Ansprechzeit des Sensorelements durch den Schutz nur wenig eingeschränkt ist.

Die Aufgabe wird durch eine Sensoranordnung nach Anspruch 1 sowie ein Verfahren zur Herstellung einer Sensoranordnung nach Anspruch 10 gelöst. Vorteilhafte Ausgestaltungen der Sensoranordnung sowie des Verfahrens zur Herstellung sind Gegenstand von Unteransprüchen.

Es wird eine Sensoranordnung angegeben die wenigstens ein Sensorelement aufweist. Das Sensorelement weist elektrische Anschlüsse auf mit denen das Sensorelement elektrisch kontaktiert ist. Das Sensorelement ist in einem festen Kunststoffkörper angeordnet. Unter einem festen Kunststoffkörper ist ein Körper aus einem flexiblem Kunststoff zu verstehen, der eine definierte Grundform aufweist. Der Kunststoffkörper ist wenigstens teilweise verformbar, wobei der Kunststoffkörper jederzeit wieder in seine Ausgangsform zurückkehrt. Die elektrischen Anschlüsse erstrecken sich vorzugsweise über die Abmessungen des Kunststoffkörpers hinaus.

Zwischen dem Sensorelement und dem Kunststoffkörper ist wenigstens eine Isolierschicht angeordnet, die das Sensorelement einbettet. Wenigstens ein Teilbereich der elektrischen Anschlüsse, die an das Sensorelement angrenzen, ist von der ersten Isolierschicht umgeben. Die erste Isolierschicht erstreckt sich vom Sensorelement auf die angrenzenden Teilbereiche der elektrischen Anschlüsse. Vorzugsweise ist wenigstens der Bereich der elektrischen Anschlüsse von der ersten Isolierschicht umgeben, der sich im Innenraum des Kunststoffkörpers befindet.

In einer Ausführungsform erfasst das Sensorelement wenigstens einen physikalischen Parameter des zu messenden Mediums direkt. Das Sensorelement ist beispielsweise als Temperatursensor oder als optischer Sensor ausgebildet. Bei einem Temperatursensor wird beispielsweise die Temperatur des umgebenden Mediums erfasst. Bei einem optischen Sensor werden beispielsweise optische Signale auf die Sensoranordnung erfasst.

In einer Ausführungsform der Sensoranordnung ist zwischen der ersten Isolierschicht und dem Kunststoffkörper eine weitere Isolierschicht angeordnet.

Der Kunststoffkörper weist vorzugsweise eine Form auf, die wenigstens einen Hohlraum umfasst, der zu einer Seite hin offen ist. Die Form des Kunststoffkörpers ist jedoch nicht auf derartige Formen beschränkt, sondern kann jede beliebige Form aufweisen.

Das Material des Kunststoffkörpers und die Materialien der ersten und der weiteren Isolierschichten sind vorzugsweise unabhängig voneinander. Die Materialien sind vorzugsweise auf ihre jeweiligen Anforderungen abgestimmt und weisen zudem eine hohe Spannungsfestigkeit auf. Bei einem Temperatursensor weisen die verwendeten Materialien vorzugsweise eine hohe Wärmeleitfähigkeit auf. Bei einem optischen Sensor weisen die verwendeten Materialien vorzugsweise neutrale optische Eigenschaften bezüglich des Wellenlängenbereiches auf, der von dem optischen Sensor erfasst wird. Die Materialien sind vorzugsweise im Wellenlängenbereich des optischen Sensors für die Strahlung möglichst gut durchlässig.

Die weitere Isolierschicht enthält vorzugsweise ein flexibles oder festes Polymer.

In einer Ausführungsform der Sensoranordnung mit mehreren Sensorelementen sind die einzelnen Sensorelemente jeweils von der ersten Isolierschicht umgeben. In einer weiteren Ausführungsform weisen die Sensorelemente eine gemeinsame erste Isolierschicht auf, die alle oder einen Teil der Sensorelemente umgibt.

Die Anschlüsse des Sensorelements sind in einer Ausführungsform als starre Zuleitungen ausgeführt. Die Zuleitungen umfassen vorzugsweise einem Draht oder eine Litze, die in einer bestimmten Ausrichtung bleibt, wobei die Zuleitungen derart ausgeführt sind, dass sie das Sensorelement an einer bestimmten Position im Kunststoffkörper der Sensoranordnung fixieren.

In einer weiteren Ausführungsform weist das Sensorelement flexible Zuleitungen beziehungsweise elektrische Anschlüsse auf.

In einer weiteren Ausführungsform ist wenigstens ein Sensorelement auf einem starren Träger oder einer Leiterplatte angeordnet, der in dem Kunststoffkörper positioniert ist.

In einer Ausführungsform der Sensoranordnung weist der Kunststoffkörper wenigstens eine Führungsvorrichtung auf, die zur Positionierung des Sensorelements an einer definierten Stelle im Innenraum des Kunststoffkörpers geeignet ist. Die Führungsvorrichtung ist vorzugsweise so angeordnet beziehungsweise ausgebildet, dass zwischen dem Sensorelement und der Führungsvorrichtung des Kunststoffkörpers wenigstens ausreichend Platz für die erste Isolierschicht ist, die das Sensorelement umgibt. Die Führungsvorrichtung ist beispielsweise als Steg oder Vorsprung ausgebildet.

In einer Ausführungsform der Sensoranordnung weist wenigstens ein Sensorelement die Funktion eines Temperatursensors auf. Bekannte Temperatursensoren sind beispielsweise elektrische Bauelemente mit NTC- (Negativer Temperatur Koeffizient)oder PTC (Positiver Temperatur Koeffizient) -Eigenschaften.

In einer weiteren Ausführungsform der Sensoranordnung weist wenigstens ein Sensorelement die Funktion eines optischen Sensors auf.

In einer Ausführungsform der Sensoranordnung ist wenigstens ein Sensorelement als Temperatursensor ausgeführt und ein weiterer Sensor als optischer Sensor ausgebildet. Als optische Sensoren sind zum Beispiel Photodioden oder Phototransistoren geeignet.

In einer Ausführungsform der Sensoranordnung mit einem Temperatur- und einem optischen Sensor ist eine möglichst gleichzeitige Erfassung der Temperatur und von optischen Signalen möglich.

In einer weiteren Ausführungsform umfasst die Sensoranordnung ein optoelektronisches Bauelement. Das optoelektronische Bauelement weist vorzugsweise die Eigenschaften einer Leuchtdiode, wie beispielsweise einer LED oder OLED, auf.

In einer Ausführungsform umfasst die Sensoranordnung wenigstens einen optischen Sensor sowie wenigstens ein optoelektronisches Bauelement, die so angeordnet sind, dass sie zusammen beispielsweise die Funktion einer Lichtschranke aufweisen.

In einer Ausführungsform weist der Kunststoffkörper wenigstens im Bereich des Sensorelements eine Wandstärke von mindestens 1 mm auf. Die Wandstärke des Kunststoffkörpers im Bereich der elektrischen Zuleitungen der Sensoranordnung kann die Wandstärke im Bereich des Sensorelements sowohl unterals auch überschreiten. Vorzugsweise weist der Kunststoffkörper wenigstens in dem Bereich, in dem die Sensoranordnung mit dem zu messenden Medium in Kontakt steht eine Wandstärke von mindestens 1 mm auf.

In einer Ausführungsform der Sensoranordnung weist die Sensoranordnung eine Spannungsfestigkeit von mindestens 3000 V AC (alternating current = Wechselspannung) auf. Die Spannungsfestigkeit der Sensoranordnung ergibt sich aus der Summe der Spannungsfestigkeiten der einzelnen Isolationsschichten der Anordnung.

In einer Ausführungsform der Sensoranordnung weist die erste Isolierschicht eine Spannungsfestigkeit von vorzugsweise mindestens 1000 V AC auf. In einer besonders bevorzugten Ausführungsform weist die erste Isolierschicht eine Spannungsfestigkeit von 1250 V AC auf.

Durch eine derart aufgebaute Sensoranordnung weist diese eine Spannungsfestigkeit der Schutzklasse II nach VDE-Norm auf. Die Schutzklasse wird wenigstens im Bereich des Sensorelements und in Teilbereichen der an diesen Bereich angrenzenden elektrischen Anschlüsse erreicht. Die Sensoranordnung weist wenigstens in dem Bereich, in dem die Sensoranordnung mit dem zu messenden Medium in Kontakt steht die Schutzklasse II auf. Offene elektrische Anschlüsse zur weiteren elektrischen Kontaktierung der Sensoranordnung weisen in der Regel keine Spannungsfestigkeit nach Schutzklasse II auf, wobei die Schutzanordnung jedoch beispielsweise eine Steckverbindung aufweisen kann, die die Schutzklasse II erfüllt. Somit erfüllt beispielsweise die komplette Sensoranordnung die Schutzklasse II. Durch einen zuvor beschriebenen Aufbau der Sensoranordnung ist gewährleistet, dass die Ansprechzeit des Sensorelements nicht unzulässig stark durch die Isolierung eingeschränkt wird, und die Sensoranordnung für eine schnelle Erfassung von physikalischen Eigenschaften, wie beispielsweise der Temperatur oder eines optischen Signals auf die Sensoranordnung, geeignet ist.

In einem Verfahren zur Herstellung einer wie zuvor beschriebenen Sensoranordnung, wird ein Kunststoffkörper bereitgestellt, der einen Hohlraum aufweist. In dem Hohlraum des Kunststoffkörpers wird wenigstens ein Sensorelement mit elektrischen Anschlüssen positioniert.

In einer Ausführungsform weist das Sensorelement einen zuvor festgelegten Abstand zu dem Kunststoffkörper auf, so dass das Sensorelement an einer definierten Stelle des Hohlraums angeordnet ist.

In einer Ausführungsform des Verfahrens wird wenigstens der Hohlraum im Bereich des Sensorelements mit einem Polymer aufgefüllt. Das Polymer füllt vorzugsweise den kompletten Raum um das Sensorelement, wobei vorzugsweise keine Luft in diesem Bereich mehr vorhanden ist. Teilentladungen an Grenzflächen oder in Hohlräumen werden so vermieden.

In einer weiteren Ausführungsform wird der Hohlraum des Kunststoffkörpers vor der Positionierung des Sensorelements mit einem Polymer gefüllt wird. Das Polymer bildet die erste Isolierschicht des Sensorelements. Das Sensorelement wird anschließend in den mit dem Polymer gefüllten Hohlraum des Kunststoffkörpers bis an die gewünschte Position eingetaucht.

In einer nicht zur Erfindung gehörenden Ausführungsform des Verfahrens wird das Sensorelement vor der Positionierung im Hohlraum des Kunststoffkörpers in eine erste Isolierschicht eingebettet. Hierbei eignet sich beispielsweise ein Spritzgussverfahren, um das Sensorelement und wenigstens angrenzende Bereiche der elektrischen Anschlüsse mit einer ersten Isolierschicht zu umspritzen.

In einer Ausführungsform des Verfahrens wird das mit einer ersten Isolierschicht umhüllte Sensorelement, das in dem Hohlraum des Kunststoffkörpers positioniert ist, mit einer weiteren Isolierschicht umhüllt. Wenigstens der Zwischenraum zwischen der ersten Isolierschicht des Sensorelements und dem Kunststoffkörpers wird vorzugsweise mit einem Polymer gefüllt.

Die oben beschriebenen Gegenstände und das Verfahren werden anhand der folgenden Figuren und Ausführungsbeispiele näher erläutert.

Die nachfolgenden Zeichnungen sind schematisch und nicht als maßstabsgetreu aufzufassen. Elemente, die einander gleichen oder die die gleiche Funktion übernehmen, weisen gleiche Bezugszeichen auf.

Es zeigen:
- Figur 1: den schematischen Aufbau einer ersten Ausführungsform einer Sensoranordnung,
- Figur 2: ein nicht zur Erfindung gehörendes Beispiel für eine andere Sensoranordnung,
- Figur 3: eine weitere Ausführungsform der Sensoranordnung, die ein Sensorelement und ein optoelektronisches Bauelement umfasst.

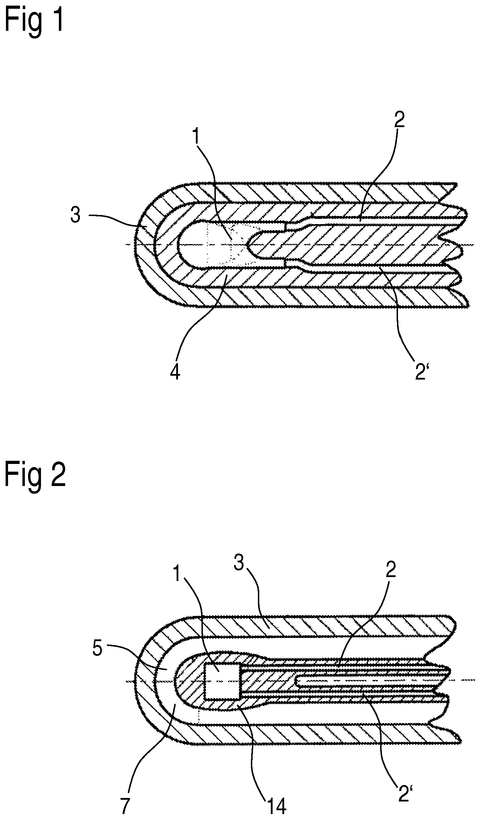

Figur 1 zeigt schematisch den Aufbau einer ersten Ausführungsform der Sensoranordnung. Die Sensoranordnung weist einen Kunststoffkörper 3 auf. Im Innenraum des Kunststoffkörpers 3 ist ein Sensorelement 1 angeordnet das in der dargestellten Ausführungsform starre elektrische Anschlüsse 2, 2' aufweist. Das Sensorelement 1 und die in Figur 1 dargestellten Teilbereiche der elektrische Anschlüsse 2, 2' sind von einer ersten Isolierschicht 4 umgeben. In Figur 1 ist nur der relevante Teilbereich der kompletten Sensoranordnung dargestellt. Die Enden der elektrischen Anschlüsse 2, 2' sind zur Kontaktierung des Sensorelements 1 vorzugsweise von außen kontaktierbar. Die erste Isolierschicht 4 kann ein festes, ein flüssiges oder ein flexibles Polymer enthalten. Erfindungsgemäß umfasst die erste Isolierschicht 4, ein flüssiges Polymer, und der Kunststoffkörper 3 ist im Endbereich wenigstens soweit verschlossen, dass das Polymer in den Innenraum des Kunststoffkörpers 3 luftdicht abgeschlossen ist.

In Figur 2 ist ein schematischer Aufbau einer anderen Sensoranordnung gezeigt. Die Sensoranordnung umfasst einen Kunststoffkörper 3, in dessen Hohlraum 7 ein Sensorelement 1 angeordnet ist. Das Sensorelement 1 weist elektrische Anschlüsse 2, 2' auf, wobei das Sensorelement 1 und die elektrischen Anschlüsse 2, 2' zumindest in dem dargestellten Teilbereich der Sensoranordnung von einer ersten Isolierschicht 14 umgeben sind. Zwischen der ersten Isolierschicht 14 und der Innenwand des Kunststoffkörpers 3 ist ein Zwischenraum vorhanden, der eine weitere Isolierschicht 5 bilden kann. Die weitere Isolierschicht 5 kann beispielsweise Luft oder ein Polymer umfassen. In einer anderen Variante, in der das Sensorelement 1 der Sensoranordnung die Eigenschaften eines Temperatursensors aufweist, ist die weitere Isolierschicht 5 vorzugsweise ein Polymer, das eine gute Wärmeleitfähigkeit aufweist. Bei einer anderen Variante, bei der das Sensorelement 1 die Eigenschaften eines optischen Sensors aufweist, ist die weitere Isolierschicht 5 vorzugsweise ein optisch transparentes Gas oder Polymer. Figur 2 zeigt nur den Bereich des Kunststoffkörpers 3, in dem das Sensorelement 1 angeordnet ist. Der weitere Bereich weist vorzugsweise wenigstens von außen elektrisch kontaktierbare Anschlüsse 2, 2' auf.

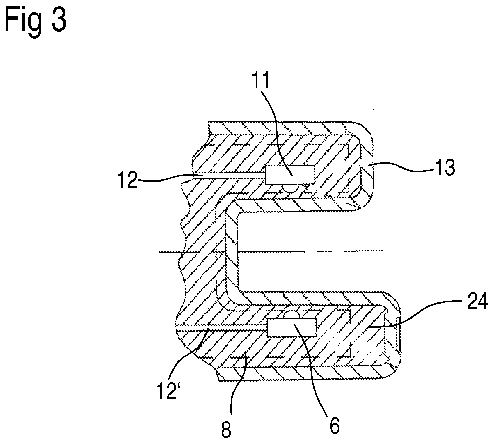

Figur 3 zeigt schematisch den Aufbau einer weiteren Ausführungsform der Sensoranordnung, die zwei Bauelemente aufweist. Wenigstens ein Bauelement ist als Sensorelement 11 ausgeführt. Ein weiteres Bauelement ist als optoelektronisches Bauelement 6 ausgeführt. Die Sensoranordnung umfasst einen Kunststoffkörper 13, in dessen Innenraum eine Träger 8 angeordnet ist. Das Sensorelement 11 und das optoelektronische Bauelement 6 sind auf dem Träger 8 mit Leiterbahnen 12, 12' angeordnet. Das Sensorelement 11 und das optoelektronische Bauelement 6 sind mittels Leiterbahnen 12, 12' elektrisch kontaktiert. Der Innenraum des Kunststoffkörpers 13 ist mit einem Polymer gefüllt, der eine erste Isolierschicht 24 um das Sensorelement 11 und um das optoelektronische Bauelement 6 bildet. Der Kunststoffkörper umschließt den Träger 8 in Figur 3 wenigstens soweit, dass die erste Isolierschicht 24, die erfindungsgemäß ein flüssiges Polymer enthält, in dem Innenraum des Kunststoffkörpers 13 verbleibt.

In der dargestellten Ausführungsform umfasst die Sensoranordnung einen optischen Sensor, wie beispielsweise eine Photodiode oder einen Phototransistor. Das optoelektronische Bauelement 6 ist beispielsweise eine LED. Die Sensoranordnung weist in der dargestellten Ausführungsform beispielsweise die Funktion einer Lichtschranke auf.

Obwohl in den Ausführungsbeispielen nur eine beschränkte Anzahl möglicher Weiterbildungen beschrieben werden konnte, ist die Erfindung nicht auf diese beschränkt. Es ist prinzipiell möglich, dass die Sensoranordnung mehrere Sensorelemente unterschiedlicher Art oder gleicher Art umfasst, sowie weitere Bauelemente enthält, wobei die Sensoranordnung eine Schutzklasse II aufweist.

### Bezugszeichenliste

- 1, 11: Sensorelement
- 2, 2': elektrischer Anschluss
- 3, 13: Kunststoffkörper
- 4, 14, 24: erste Isolierschicht
- 5: weitere Isolierschicht
- 6: optoelektronisches Bauelement
- 7: Hohlraum im Kunststoffkörper 3
- 8: Träger
- 12: Leiterbahn

## Patentansprüche

1. Sensoranordnung aufweisend,
- wenigstens ein Sensorelement (1) mit elektrischen Anschlüssen (2, 2'),
- wobei das wenigstens eine Sensorelement (1) in einem festen Kunststoffkörper (3) angeordnet ist,
- wobei zwischen dem Sensorelement (1) und dem Kunststoffkörper (3) wenigstens eine erste elektrische Isolierschicht (4) angeordnet ist, die das Sensorelement (1) einbettet,
**dadurch gekennzeichnet, dass**
- die erste Isolierschicht (4) als ein flüssiges Polymer in einem Innenraum des Kunststoffkörpers (3) verbleibt und
- der Kunststoffkörper (3) in einem Endbereich soweit verschlossen ist, dass das Polymer in dem Innenraum des Kunststoffkörpers (3) luftdicht abgeschlossen ist.

2. Sensoranordnung nach Anspruch 1, wobei zwischen der ersten Isolierschicht (4) und dem Kunststoffkörper (3) eine weitere elektrische Isolierschicht (5) angeordnet ist.

3. Sensoranordnung nach Anspruch 2, wobei die weitere Isolierschicht (5) ein Polymer enthält.

4. Sensoranordnung nach einem der vorhergehenden Ansprüche, wobei die elektrischen Anschlüsse (2, 2') als starre Zuleitungen ausgeführt sind.

5. Sensoranordnung nach einem der vorhergehenden Ansprüche, wobei wenigstens ein Sensorelement (1) die Funktion eines Temperatursensors aufweist.

6. Sensoranordnung nach einem der vorhergehenden Ansprüche, wobei wenigstens ein Sensorelement (1) die Funktion eines optischen Sensors aufweist.

7. Sensoranordnung nach einem der Ansprüche 5 oder 6, das wenigstens ein optoelektronisches Bauelement (6) umfasst.

8. Sensoranordnung nach einem der vorhergehenden Ansprüche, wobei die erste Isolierschicht eine Spannungsfestigkeit von mindestens 1000 V AC aufweist.

9. Sensoranordnung nach einem der vorhergehenden Ansprüche, wobei der Kunststoffkörper (3) eine Wandstärke aufweist, die mindestens 1 mm beträgt.

10. Verfahren zur Herstellung einer Sensoranordnung nach einem der vorhergehenden Ansprüche,
wobei ein Kunststoffkörper (3) bereitgestellt wird, der einen Hohlraum (7) aufweist, in dem wenigstens ein Sensorelement (1) positioniert wird und eine erste elektrische Isolierschicht (4), die das Sensorelement (1) einbettet und die ein flüssiges Polymer aufweist, angeordnet wird.

11. Verfahren nach Anspruch 10, wobei der Hohlraum (7) zwischen dem Sensorelement (1) und dem Kunststoffkörper (3) mit dem Polymer gefüllt wird.

12. Verfahren nach Anspruch 10, wobei der Hohlraum (7) des Kunststoffkörpers (3) vor der Positionierung des Sensorelements (1) mit dem Polymer gefüllt wird.

13. Verfahren nach einem der Ansprüche 10 bis 12, wobei ein Zwischenraum zwischen der ersten Isolierschicht (4) des Sensorelements (1) und dem Kunststoffkörper (3) mit einem Polymer gefüllt wird.

## Claims

1. Sensor arrangement having
- at least one sensor element (1) with electrical connections (2, 2'),
- wherein the at least one sensor element (1) is arranged in a solid plastic-material body (3),
- wherein at least a first electrical insulating layer (4), which embeds the sensor element (1), is arranged between the sensor element (1) and the plastic-material body (3),
**characterized in that**
- the first insulating layer (4) remains as a liquid polymer in a space inside the plastic-material body (3) and
- the plastic-material body (3) is closed in an end region to the extent that the polymer is sealed off in an airtight manner in the space inside the plastic-material body (3).

2. Sensor arrangement according to Claim 1, wherein a further electrical insulating layer (5) is arranged between the first insulating layer (4) and the plastic-material body (3).

3. Sensor arrangement according to Claim 2, wherein the further insulating layer (5) comprises a polymer.

4. Sensor arrangement according to one of the preceding claims, wherein the electrical connections (2, 2') are configured as rigid supply leads.

5. Sensor arrangement according to one of the preceding claims, wherein at least one sensor element (1) has the function of a temperature sensor.

6. Sensor arrangement according to one of the preceding claims, wherein at least one sensor element (1) has the function of an optical sensor.

7. Sensor arrangement according to either of Claims 5 and 6, which comprises at least one optoelectronic component (6).

8. Sensor arrangement according to one of the preceding claims, wherein the first insulating layer has voltage endurance of at least 1000 V AC.

9. Sensor arrangement according to one of the preceding claims, wherein the plastic-material body (3) has a wall thickness which is at least 1 mm.

10. Method for producing a sensor arrangement according to one of the preceding claims, wherein a plastic-material body (3) is provided which has a hollow space (7) in which at least one sensor element (1) is positioned and a first electrical insulating layer (4) which embeds the sensor (1) and comprises a liquid polymer is arranged.

11. Method according to Claim 10, wherein the hollow space (7) between the sensor element (1) and the plastic-material body (3) is filled with the polymer.

12. Method according to Claim 10, wherein the hollow space (7) of the plastic-material body (3) is filled with the polymer before the positioning of the sensor element (1).

13. Method according to one of Claims 10 to 12, wherein an intermediate space between the first insulating layer (4) of the sensor element (1) and the plastic-material body (3) is filled with a polymer.

## Revendications

1. Dispositif capteur comportant :
- au moins un élément de détection (1) équipé de bornes électriques (2, 2') ;
- l'au moins un élément de détection (1) étant disposé dans un corps en matière plastique (3) solide ;
- au moins une première couche isolante électrique (4) étant disposée entre l'élément de détection (1) et le corps en matière plastique (3), cette couche encastrant l'élément de détection (1) ;
**caractérisé en ce que** :
- la première couche isolante (4) sous la forme d'un polymère fluide reste dans un espace intérieur du corps en matière plastique (3) ; et
- le corps en matière plastique (3) est fermé dans une région d'extrémité de façon à ce que le polymère soit clôturé de façon étanche à l'air dans l'espace intérieur du corps en matière plastique (3).

2. Dispositif capteur selon la revendication 1, une couche isolante électrique (5) supplémentaire étant disposée entre la première couche isolante (4) et le corps en matière plastique (3).

3. Dispositif capteur selon la revendication 2, la couche isolante (5) supplémentaire contenant un polymère.

4. Dispositif capteur selon l'une quelconque des revendications précédentes, les bornes électriques (2, 2') étant réalisées sous la forme de connexions rigides.

5. Dispositif capteur selon l'une quelconque des revendications précédentes, au moins un élément de détection (1) ayant la fonction d'un capteur de température.

6. Dispositif capteur selon l'une quelconque des revendications précédentes, au moins un élément de détection (1) ayant la fonction d'un capteur optique.

7. Dispositif capteur selon l'une quelconque des revendications 5 ou 6, comprenant au moins un composant optoélectronique (6).

8. Dispositif capteur selon l'une quelconque des revendications précédentes, la première couche isolante présentant une résistance à la tension d'au moins 1000 V CA.

9. Dispositif capteur selon l'une quelconque des revendications précédentes, le corps en matière plastique (3) présentant une épaisseur de paroi d'au moins 1 mm.

10. Procédé de fabrication d'un dispositif capteur selon l'une quelconque des revendications précédentes, un corps en matière plastique (3) étant mis à disposition, celui-ci comportant un espace creux (7) dans lequel au moins un élément de détection (1) est positionné et dans lequel une première couche isolante électrique (4) encastre l'élément de détection (1) et comporte un polymère fluide.

11. Procédé selon la revendication 10, l'espace creux (7) étant rempli de polymère entre l'élément de détection (1) et le corps en matière plastique (3).

12. Procédé selon la revendication 10, l'espace creux (7) du corps en matière plastique (3) étant rempli de polymère avant le positionnement de l'élément de détection (1).

13. Procédé selon l'une quelconque des revendications 10 à 12, un espace intermédiaire prévu entre la première couche isolante (4) de l'élément de détection (1) et le corps en matière plastique (3) étant rempli de polymère.
